# EUROPÄISCHE PATENTSCHRIFT

(11) **EP 2 524 750 B1**
(45) Veröffentlichungstag und Bekanntmachung des Hinweises auf die Patenterteilung: **30.05.2018**
(21) Anmeldenummer: 12001571.4
(22) Anmeldetag: 08.03.2012
(51) Int. Cl.: B22F 3/105, B22F 5/00, B22F 5/10, B22F 7/08

(54) **Verfahren zur Herstellung metallischer Bauteile mit einer Öffnung**
Method for producing metallic components with an opening
Procédé de fabrication de composants métalliques avec une aperture

(30) Priorität: 18.05.2011 DE 102011101857
(43) Veröffentlichungstag der Anmeldung: 21.11.2012
(73) Patentinhaber: MAN Truck & Bus AG, 80995 München (DE)
(72) Erfinder: Schuster, Rainer, 90459 Nürnberg (DE)
(74) Vertreter: Liebl, Thomas

(56) Entgegenhaltungen:
- EP-A2- 1 153 686
- EP-A2- 1 990 127
- DE-A1-102007 059 865

## Beschreibung

Die Erfindung betrifft ein Verfahren zur Herstellung metallischer Bauteile die eine Öffnung und/oder einen Hohlraum umfassen durch selektives Lasersintern und/oder Laserschmelzen, wobei schichtweise ein- oder mehrkomponentiges metallisches Pulver an entsprechenden Querschnittsbereichen durch den Einsatz von Laserstrahlung aufgeschmolzen wird. Das erfindungsgemäße Verfahren, bezieht sich insbesondere auf ein selektives Laserschmelzverfahren (SLM; "selective laser melting"), das beispielsweise in der Offenlegungsschrift DE 195 11 772 A1 beschrieben ist. Demnach wird mittels der dort beschriebenen Vorrichtung zum Herstellen eines dreidimensionalen Objektes, durch aufeinander folgendes Verfestigen von Schichten eines pulverförmigen, mittels elektromagnetischer Strahlung oder Teilchenstrahlung verfestigbaren Aufbaumaterials, an jeweiligen Querschnittsbereichen des Objektes Pulvermaterial verfestigt. Schichtweise wird Pulvermaterial auf einen Träger der vorzugsweise mit einer Substratplatte (Unterlage) bestückt ist aufgebracht wobei nachdem eine Pulverschicht auf die Substratplatte aufgebracht wurde, ein Laserstrahl über einen Scannerspiegel gezielt auf bestimmte Schichtbereiche abgelenkt wird, sodass das dort befindliche Metallpulver aufgeschmolzen wird und sich nach anschließend verfestigt. Nachdem eine erste Schicht gebildet wurde, wird der Träger um eine Schichtdicke im Bauraum nach unten abgesenkt und eine neue Pulverschicht mittels des Beschichters über die vorhergehende aufgezogen. Nach Aufbringung dieser Pulverschicht wird erneut ein Laserstrahl gezielt zur selektiven Aufschmelzung einzelner Pulverbereiche auf entsprechende Stellen des Pulvermaterials gelenkt.

Diese Verfahrensschritte werden mehrmals durchlaufen so dass sich ein fertiges Bauteil ergibt, das nachdem es von dem restlichen, unverfestigten Pulver befreit ist, im wesentlichen das fertige Bauteil bildet.

Die Lehre der Europäischen Patentanmeldung EP 1 358 855 A1 beschreibt ebenfalls ein Verfahren zur Herstellung von Produkten durch Freiformlasersintern unter Verwendung eines SLM-Verfahrens, wobei auf einer Substratplatte mehrere metallische oder nichtmetallische Produkte aufgebaut werden. Damit die einzelnen Objekte nicht undefiniert in einem Pulverbett liegen und vor Verlagerung während des Bauprozesses geschützt sind und um deren Lösbarkeit von der Substratplatte zu vereinfachen sind Haltestege vorgesehen, welche das aufzubauende Produkt mit der Substratplatte verbinden wobei auch die Haltestege (hier: Stützen) auch mittels des SLM-Verfahrens hergestellt werden. Damit die Produkte leichter von der Substratplatte gelöst werden können, sind die Haltestege mit Sollbruchstellen versehen, die eine Verringerung der Festigkeit der Stütze entlang der Außenkontur der Produkte aufweisen. Nachdem der Bauprozess abgeschlossen ist, wird das nicht verfestigte Pulver aus dem Bauraum entfernt, die Substratplatte samt der auf ihr befindlichen Produkte aus der Anlage entnommen und die einzelnen Produkte durch Biegebeanspruchung der Sollbruchstellen von der Substratplatte gelöst. Die Sollbruchstellen dienen hierbei ausschließlich der einmaligen Ablösung der Produkte von der Substratplatte bzw. der prozessbedingten Haltestege.

Insbesondere im Anwendungsbereich der Kfz-Technik hat sich das Verfahren des Bruchtrennens mit dem anschließenden Zusammensetzen der Bauteile entwickelt, vgl. DE 100 22 884 A1. Hierbei werden beispielsweise Pleuelstangen für Brennkraftmaschinen aus einem duktilen Ausgangsmaterial durch Schmieden hergestellt wobei der noch glühende Schmiederohling lokal durch Wasserstrahlen abgekühlt und dadurch versprödet wird. Nach der Versprödung kann der Pleuelkopf getrennt werden. Der restliche Pleuel verbleibt im ursprünglichen duktilen Gefüge. Nach dieser Behandlung kann der Pleuelkopf nach seinem Erkalten durch Bruchtrennen gespalten und anschließend, nachdem Lagerelemente und ein Wellenelement eingesetzt wurde, wieder zusammengesetzt werden.

Die Offenlegungsschrift DE10 2007 059 865 A1 beschreibt ebenfalls ein SLM-Verfahren und legt explizit in den Absätzen 3 und 4 den Unterschied von selektiven Laserschmelz- und Lasersinterverfahren dar.

Der Stand der Technik der SLM-Verfahren basiert auf dem Gedanken, die durch ein SLM-Verfahren angefertigte Teile möglichst unmittelbar aus dem Verfahren zu gewinnen, möglichst keine Nachbearbeitungsprozesse hierfür vorzusehen und möglichst einstückige Bauteile aus dem SLM-Verfahren zu generieren.

Ferner müssen im Stand der Technik der SLM-Verfahren zur Herstellung von Bauteilen mit geschlossenen Hohlräumen Ablaufbohrungen vorgesehen werden, durch welche das in den Hohlräumen gefangene unverfestigte Pulvermaterial herausrieseln kann wobei diese Ablaufbohrungen nach Entleerung der Hohlräume durch ein Stopfen zu verschließen sind. Auch ist es im Stand der Technik der SLM-Verfahren nur eingeschränkt möglich, Öffnungen eines SLM-Bauteils mit einer Beschichtung, einer thermischen Nachbehandlung und/oder mit einem angrenzend anzuordnenden Bauteil zu versehen.

Der Stand der Technik der Bruchtrennverfahren der ein nachgelagertes Zusammensetzen der Teile vorsieht, beschränkt sich üblicherweise auf Guss-, Schmiede-, und/oder spanabhebend gefertigte Teile.

Die EP 1 990 127 A2 offenbart ein Verfahren zur Herstellung eines bruchgetrennten Pleuels, bei dem ein Lagerauge des Pleuels mit einer durch Beschichtung seiner Innenfläche gebildeten Funktionsauflage versehen ist. Diese Beschichtung kann dabei beispielsweise mittels eines Laser-Schmelz-Verfahrens auf die Innenfläche des Lagerauges aufgebracht werden. Die erzeugte Schichtdicke kann dabei beispielsweise 0,5 mm bis 2,0 mm betragen.

Der Erfindung liegt die Aufgabe zugrunde, ein Verfahren zur Herstellung metallischer Bauteile mit den Merkmalen des Oberbegriffs des Anspruchs 1 bzw. ein Bauteil mit dem Merkmal des Anspruchs 9 derart weiterzubilden, dass eine höhere Gestaltungsfreiheit hinsichtlich der Öffnungen und/oder der Hohlräume des Bauteils sowie eine höhere Bearbeitungsfreiheit hinsichtlich einer Bearbeitung und/oder Montage weitere Teile in oder an die Öffnungen und/oder die Hohlräume des Bauteils ermöglichen und/oder geringere Bauräume in den Lasersinter- und/oder Laserschmelzmaschinen benötigt werden. Eine weitere Aufgabe der Erfindung ist es, die Anordnung der Öffnungen und/oder Hohlräume innerhalb des Bauteils freier wählen zu können und/oder einen möglichst definierten und vorhersehbaren sowie möglichst frei wählbaren Verlauf der Bruchlinie innerhalb des Bauteiles zu erreichen.

Diese Aufgabe wird durch die Merkmale des Anspruches 1 oder 9 gelöst. Vorteilhafte Weiterbildungen der Erfindung ergeben sich aus den Unteransprüchen 2 bis 8 sowie 10 bis 15.

Gemäß Patentanspruch 1 wird ein Verfahren zur Herstellung metallischer Bauteile, die eine Öffnung und/oder einen Hohlraum umfassen, vorgeschlagen, wobei das Bauteil zumindest einen generativ aufgebauten Bauteilbereich umfasst, der durch selektives Lasersinter- und/oder Laserschmelzen hergestellt wird, wobei schichtweise ein- oder mehrkomponentiges metallisches Pulver an entsprechenden Querschnittsbereichen durch Einsatz von Laserstrahlung aufgeschmolzen wird. Erfindungsgemäß ist vorgesehen, dass das Bauteil nach dem Lasersinter- und/oder Laserschmelzvorgang einem Bruchtrennprozess unterzogen wird, bei dem das Bauteil entlang einer nur durch den generativ aufgebauten Bauteilbereich verlaufenden Bruchlinie in mindestens zwei Bruchteile gebrochen wird und danach die wenigstens zwei Bruchteile an Ihren Bruchstellen zur Bildung des Bauteils miteinander verbunden werden. Die Bruchlinie berührt und/oder durchsetzt zumindest bereichsweise die wenigstens eine Öffnung und/oder den wenigstens einen Hohlraum.

Dadurch dass durch das Brechen und wieder Zusammensetzen des Lasersinter- oder Laserschmelzbauteils im zerlegten Zwischenzustand die Öffnung und/oder der Hohlraum frei zugänglich ist, kann diese "freie" Zugänglichkeit dazu verwendet werden, um die Öffnung und/oder den Hohlraum und/oder die Bruchstelle einer Modifikation zu unterziehen und/oder an die Öffnung oder den Hohlraum ein weiteres Element zu montieren. Nachdem die Modifikation bzw. die Montage vollzogen ist, werden die beiden Bruchteile des Bauteils wieder zusammengesetzt und verbunden, wobei die Verbindung stoffschlüssig oder formschlüssig erfolgen kann. Die Modifikation kann auch eine thermische und/oder mechanische Nachbehandlung und/oder eine Montage einer Dichtung und/oder einem Körper in oder an die Öffnung und/oder den Hohlraum umfassen.

In einer bevorzugten Ausführungsform wird innerhalb einer Pulverschicht und/oder in unterschiedlichen Pulverschichten der Energieeintrag pro Flächeneinheit in das Pulvermaterial ausgehend von dem Laserstrahl geändert, sodass das aufgeschmolzene Pulver unter dem geänderten Energieeintrag pro Flächeneinheit des Laserstrahls eine andere Materialeigenschaft als benachbarte Materialbereiche aufweist. Durch die Änderung des Energieeintrags pro Flächeneinheit kann beispielsweise die nach Aushärtung gebildete Korngröße des verfestigten Pulvermaterials verändert werden. So kann beispielsweise die Materialeigenschaft gezielt an bestimmten Bereichen des Bauteils eine höhere und an anderen Bereichen eine niedrigere Sprödigkeit aufweisen, dies erlaubt eine gezielte Beeinflussung der Bruchlinie. Darüber hinaus können durch die Änderungen des Energieeintrags pro Flächeneinheit des Laserstrahls martensitische Bereiche, Grobkornzonen oder vergleichbare Unterschiede herausgebildet werden. Der Energieeintrag pro Flächeneinheit kann dadurch erhöht werden, dass die Leistung des Laserstrahls erhöht wird, der Fokus bzw. der Durchmesser des Laserstrahls im Bearbeitungsbereich verändert wird und/oder die Verfahrgeschwindigkeit des Strahls auf dem auszuhärtenden Material verringert wird. Neben der Erhöhung des Energieeintrags pro Flächeneinheiten des Pulvermaterial kann innerhalb einer Pulverschicht der Laserstrahl nach dem ersten Aufschmelzen des Pulvers an wenigstens einem bereits verfestigten Schichtbereich das Pulver nochmals aufgeschmolzen und/oder nochmals erwärmt und/oder abgetragen werden bevor der nachfolgende Schichtauftrag ausgeführt wird. Durch das nochmalige Aufschmelzen und/oder erwärmen kann dieser Bereich einer Wärmebehandlung unterzogen werden, um ebenfalls die Materialeigenschaften an diesem Bereich gezielt zu verändern, insbesondere wiederum eine Materialeigenschaftsveränderung um den Bruchlinienverlauf definiert zu beeinflussen.

Hinsichtlich der Beeinflussung des Pulvermaterials während oder nach dem SLM-Prozess kann zum Beispiel das erfindungsgemäße Bauteil zur metallurgischen Beeinflussung lokal einer Kühlung unterzogen werden. Diese lokale Beeinflussung kann vorteilhaft für den Bruchtrennprozess sein.

Die Änderung des Energieeintrags pro Flächeneinheit und/oder das nochmalige Aufschmelzen und/oder das Erwärmen und/oder das Abtragen durch den Laserstrahl wird bevorzugt im Bereich der gewünschten Bruchlinie ausgeführt. Dadurch, dass im Bereich der gewünschten Bruchlinie der Laserstrahl derart geändert auf das Material einwirkt, dass die dortigen Bereiche eine erhöhte Sprödigkeit aufweisen, erlaubt dies einen definierten und freier gestaltbaren Verlauf der Bruchlinie. So ist es mit diesem Vorgehen möglich, auf einfache und komfortable Weise sowie geringem Aufwand einen beliebigen, nahezu frei gestaltbaren Verlauf der Bruchlinie innerhalb eines Bauteils festzulegen, der beispielsweise den späteren Belastungsprofilen und/oder Krafteinwirkungsprofilen des Bauteils gerecht wird. So kann beispielsweise ein mit einer Öffnung und/oder einem Hohlraum versehenes Bauteil trotz des Brechens und wieder Zusammensetzens für einen späteren Einsatzzweck z. B. einer Biegebeanspruchung mit einem derart definierten Bruchverlauf versehen werden, der nach Zusammensetzen der Bruchteile eine möglichst geringe negative Auswirkung auf die Biegebeanspruchung hat. Dies kann durch eine entsprechende Zick-Zack-Verzahnung die nach Zusammensetzen einen symmetrischen Formschluss der beiden Bruchteile darstellt begünstigt werden, hinsichtlich vorteilhafter Bruchlinienverläufe für besteimmte Kraftbeanspruchungen des Bauteils wird auf die Lehre der DE 100 22 884 A1 Bezug genommen.

In DE 100 22 884 A1 sind zur Bruchverlaufsteuerung eine Bohrung oder eine Öffnung beschrieben. Diese ist im erfindungsgemäßen Verfahren zwar vorteilhaft aber nicht zwingend notwendig, da durch die Bildung von Zonen mit höherer Sprödigkeit mittels des SLM-Verfahren eine ausreichende Bruchlinienbeeinflussung erzielt werden kann.

Da insbesondere großvolumige SLM-Bauteile einen hohen fertigungstechnischen Aufwand sowie Kostenaufwand darstellen ist es vorteilhaft, das Bauteil als Hybridbauteil zu gestalten wobei das Bauteil aus wenigstens zwei Bauteilbereichen besteht und ein erster Bauteilbereich aus einem Gussverfahren oder einem spanabhebenden Verfahren hergestellt wird und ein zweiter Bauteilbereich aus einem selektiven Lasersinter- und/oder Laserschmelzverfahren hergestellt wird. Der erste und der zweite Bauteilbereich werden miteinander verbunden. Insbesondere wird der zweite Bauteilbereich direkt auf den ersten Bauteilbereich durch ein selektives Lasersinter- und/oder Laserschmelzverfahren aufgebaut.

Vorzugsweise wird der großvolumige, geometrisch weniger anspruchsvolle Bauteilbereich durch ein Gussverfahren oder ein spanabhebendes Verfahren gefertigt. Anschließend wird auf wenigstens eine Fläche des ersten Bauteilbereichs wieder sukzessive Pulvermaterial aufgebracht und selektiv verfestigt. In einer besonders bevorzugten Ausführungsform sind neben der Öffnung und/oder dem Hohlraum der die Bruchlinie berührt und/oder durchsetzt weitere Hohlräume, beispielsweise Kanäle zum führen eines Mediums vorgesehen, die sich aus dem ersten, konventionell hergestellten Bauteilbereich in den zweiten, generativ durch ein SLM-Verfahren hergestellten Bauteilbereich erstrecken.

Gemäß einer weiteren vorteilhaften Maßnahme sind im Bereich der Bruchlinie zumindest bereichsweise geometrisch ausgebildete Sollbruchstellen angeordnet. Diese können z. B. dadurch erzeugt werden, dass das dort befindliche Pulvermaterial keine vollständige und/oder keine vollflächige Aufschmelzung erfährt. Die auf diese Weise nicht verfestigten Bauteilbereiche tragen damit keinen Beitrag zur Festigkeit des Bauteils bei, sodass diese Stellen bevorzugt brechen.

Alternativ oder zusätzlich hierzu kann es vorgesehen sein, dass nach dem Lasersinter- und/oder Laserschmelzvorgang das Bauteil durch oberflächliche Einwirkung des Lasers und/oder eines spanabhebenden Werkzeugs ein Materialabtrag und/oder eine Materialschwächung erfährt, die im oberflächlichen Bereich der Bruchlinie liegt. Hierzu ist es besonders vorteilhaft, wenn zum Materialabtrag und/oder zur Materialschwächung der Laser des Lasersinter- und/oder Laserschmelzverfahrens verwendet wird. Durch diese zusätzlichen Maßnahmen kann die Materialeigenschaft und insbesondere das Bruchverhalten des Bauteils im Bereich der Bruchlinie weiter definiert beeinflusst werden.

Neben dem Verfahren umfasst der Erfindungsgedanke auch ein Bauteil gemäß Anspruch 9, erhältlich durch das erfindungsgemäße Verfahren, mit einer Öffnung und/oder einem Hohlraum, das zumindest einen generativ aufgebauten Bauteilbereich umfasst, der aus einem selektiven Lasersinter- und/oder Laserschmelzverfahren gebildet wird wobei schichtweise aufgebrachtes Pulvermaterial durch Einwirkung eines Laserstrahls an entsprechenden Stellen des Bauteils aufgeschmolzen wird. Erfindungsgemäß besteht das Bauteil aus wenigstens zwei miteinander verbundenen Bruchteilen, die durch Bruchtrennung des nach dem Lasersinter- und/oder Laserschmelzverfahrens hergestellten Bauteils entlang einer nur durch den generativ aufgebauten Bauteilbereich verlaufenden Bruchlinie gebildet wurden und dabei die Bruchlinie zumindest bereichsweise die Öffnung und/oder den Hohlraum berührt und/oder durchsetzt. Dieses Bauteil hat dabei den Vorteil, dass die Öffnung und/oder der Hohlraum in seiner Anordnung und/oder Gestaltung und/oder Ausrichtung frei gestaltbar ist, sowie dass die Öffnung und/oder der Hohlraum einfacher oder überhaupt erst einer bestimmten Modifikation und/oder einer Montage weiterer Teile unterzogen werden kann.

Das Bauteil ist vorzugsweise aus zwei miteinander verbundenen Bauteilbereichen versehen, bei denen ein erster Bauteilbereich durch das selektive Lasersinter- und/oder Laserschmelzverfahren und ein zweiter Bauteilbereich durch ein Gussverfahren und/oder ein spanabhebendes Verfahren hergestellt ist. Die Bruchlinie verläuft dabei durch den mittels SLM-Verfahren generierten ersten Bauteilbereich. Durch das zumindest bereichsweise ausbilden des Bauteils aus einem konventionellen Herstellungsverfahren können die Herstellungskosten signifikant reduziert werden, da der Volumenanteil des selektiven Lasersinter- und/oder Laserschmelzverfahrens reduziert wird.

Vorzugsweise sind der erste und der zweite Bruchteil lösbar miteinander verbunden, insbesondere formschlüssig und/oder der erste und der zweite Bauteilbereich unlösbar miteinander verbunden, insbesondere stoffschlüssig. Der Formschluss kann beispielsweise durch eine Schraub oder eine Nietverbindung erfolgen. Die stoffschlüssige Verbindung kann durch Kleben oder Auftragsschweißen erfolgen.

In einer besonders bevorzugten Ausführungsform ist die Öffnung des Bauteils, durch welche die Bruchlinie führt oder angrenzt, als Lagerbereich zur direkten oder indirekten Lagerung eines drehbar gelagerten Mittels ausgebildet. Insbesondere wenn das Mittel mit seinen Kontaktbereichen zu der Öffnung in die temporär zerlegte, "aufgebrochene" Öffnung eingesetzt werden kann und nach dem Einsetzen des Mittels in die Öffnung diese wieder durch das aneinandersetzten der Bruchteile zusammengesetzt wird, kann dies die Montage des Mittels an das Bauteil erheblich vereinfachen. Insbesondere wenn die Kontaktfläche einen verjüngte Bereich innerhalb des Mittels darstellt, der nicht in die "geschlossene", nicht-aufgebrochene Öffnung eingesetzt werden könnte. Neben einem stabförmigen Element kann das Mittel auch Lagerschalen umfassen die auf diese Weise in die Öffnung des Bauteils montierbar sind.

Vorzugsweise ist das Bauteil ein Motorteil, ein Motoranbauteil, ein als Pleuel ausgebildetes Motoranbauteil, ein Zylinderkopf, ein Kurbelwellengehäuse, ein Auspuffsystem, ein Ölmodul, eine Nockenlager, ein Fahrwerksteil, ein Kurbelwellenlager und/oder ein Bestandteil der vorgenannten Teile. Grundsätzlich ist dieses Verfahren auch für Bauteile jeglicher Art vorteilhaft, insbesondere Gehäuseteile, Deckelelemente, Dentalteile, Lagerelemente, Verbindungs- und/oder Schnittstellenbereiche von metallischen Teilen.

Bevorzugt ist zumindest der durch ein selektives Sinter- und/oder Laserschmelzverfahren aufgebaute Bauteilbereich aus Aluminium, Edelstahl, Warmarbeitsstrahl, Titan und/oder einer Nickel-Basis-Legierung gebildet. Wesentlich hierbei ist, dass durch entsprechende Veränderung des Laserstrahls während des generativen Aufbauverfahrens die Bereiche des Bauteils mit unterschiedlichen Materialeigenschaften, insbesondere mit unterschiedlicher Sprödigkeit versehen werden kann.

Die Anwendung des Erfindungsgedankens kann dahingehend optimiert werden, dass zumindest eine die Bruchlinie kontaktierende Öffnung und/oder Hohlraum sich sowohl in den durch ein selektives Lasersinter- und/oder Laserschmelzverfahren aufgebauten Bauteilbereich als auch in den durch ein andersartiges Herstellverfahren aufgebauten Bauteilbereich erstreckt. Durch diese Maßnahme wird trotz einer relativ großen Öffnung und/oder eines relativ großen Hohlraums ermöglicht, den Anteil des generativ hergestellten Bauteilbereichs gegenüber dem konventionell hergestellten Bauteilbereich gering zu halten.

In einer besonders bevorzugten Ausführungsform wird an einem konventionell hergestellten Bauteilbereich an zwei, beispielsweise zwei gegenüberliegenden Flächen des Bauteilbereichs jeweils ein durch ein selektives Lasersinter- und/oder Laserschmelzverfahren aufgebauter Bauteilbereich aufgebaut, wobei wenigstens einer dieser Bereiche die Öffnung und/oder den Hohlraum umfasst.

Dadurch dass die Bruchlinie im generativ aufgebauten Bauteilbereich liegt, und die "Steuerung" des Bruchverhaltens des Bauteilbereichs und damit die definierte Gestaltung der Bruchlinie ermöglicht, ist ein Bruch initiierbar, der ohne Kerben und/oder andersartige oberflächlich auf das Bauteil einwirkende Maßnahmen auskommt, sodass die Außenkontur bzw. die Mantelfläche des Bauteilbereichs nicht durch bruchspezifische Fördermaßnahmen (z. B. Kerben) versehen werden muss. Nichtsdestotrotz können jedoch derartige Fördermaßnahmen im erfindungsgemäßen Verfahren zur Anwendung kommen.

Die Erfindung ist anhand von Ausführungsbeispielen in den Zeichnungsfiguren näher erläutert. Diese zeigen:
- Fig. 1a-d:: Eine schematische Darstellung des Bruchtrennens gemäß dem Stand der Technik;
- Figur 2a-e:: eine schematische Darstellung des erfindungsgemäßen Bruchtrennverfahrens eines selektiven Laserschmelzbauteils;
- Figur 3:: eine schematische Darstellung eines nach dem Zusammensetzen verschraubten erfindungsgemäßen Bauteils;

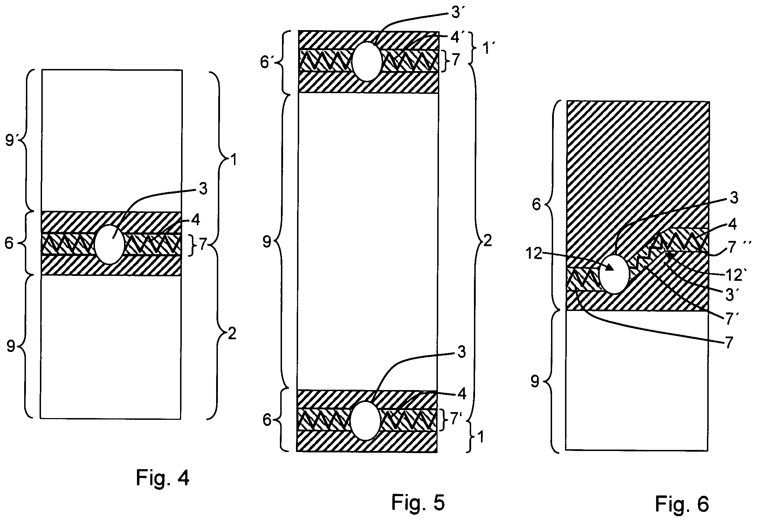

- Figur 4:: eine schematische Darstellung einer alternativen Ausführungsform, wobei das Bauteil zwei konventionell gefertigte Bauteilbereiche und einen generativ gefertigten Bauteilbereich umfasst;
- Figur 5:: eine schematische Darstellung eines alternativ gestalteten Bauteils bestehend aus zwei generativ gefertigten Bauteilbereichen sowie einem konventionell gefertigten;
- Figur 6:: eine schematische Darstellung eines erfindungsgemäßen Bauteils wobei die Bruchlinie einen Knick aufweist;

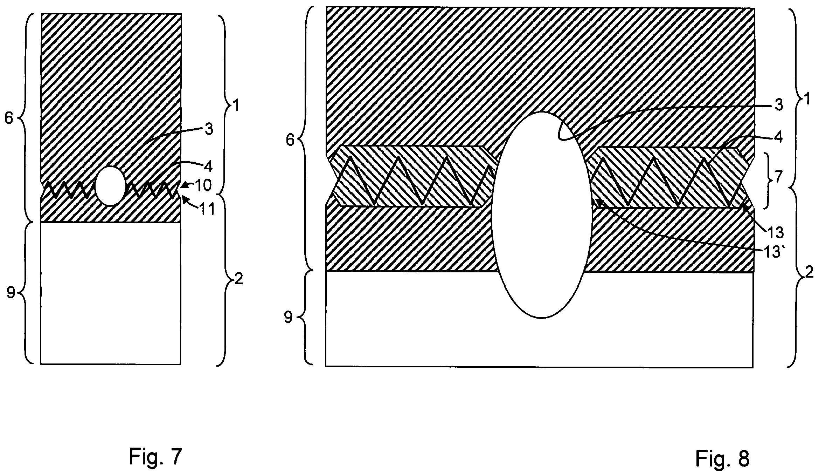

- Figur 7:: eine schematische Darstellung einer alternativen Ausführungsform des erfindungsgemäßen Bauteils gemäß Zeichnungsfigur 2e wobei das Bauteil im Bereich der Bruchlinie eine oberflächliche Kerbe umfasst;
- Figur 8:: eine schematische Detaildarstellung gemäß dem Bauteil der Figur 7 wobei im Bereich der Bruchlinie das Pulvermaterial mit einer höheren Sprödigkeit durch Veränderung des Energieeintrags des Lasers erreicht wurde (beeinflusste Bruchzone).

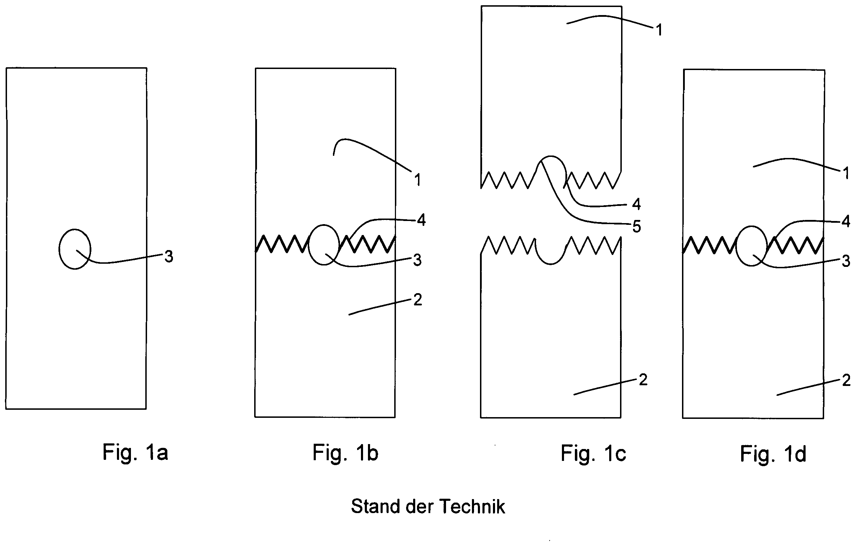

In den Zeichnungsfiguren 1a bis 1d ist ein Bruchtrennverfahren nach dem Stand der Technik dargestellt, bei dem ein homogenes, aus einem Guss- oder Schmiedeprozess gewonnenes Bauteil mit einer Bohrung versehen ist. Dieses Bauteil wird gemäß Figur 1b und 1c gebrochen und gemäß Figur 1d wieder zusammengesetzt werden.

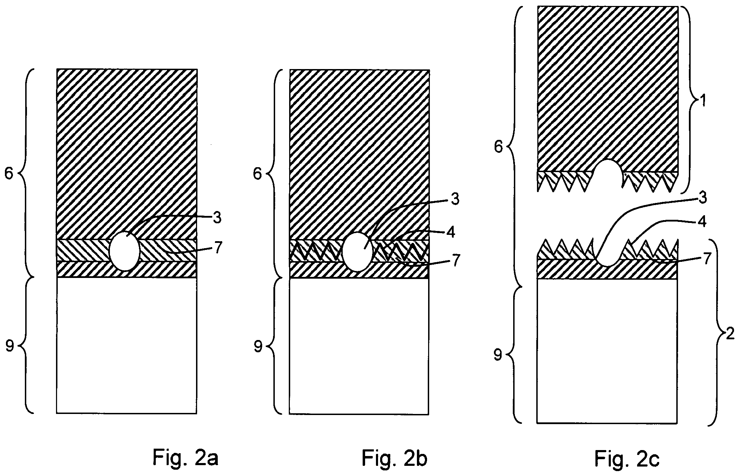

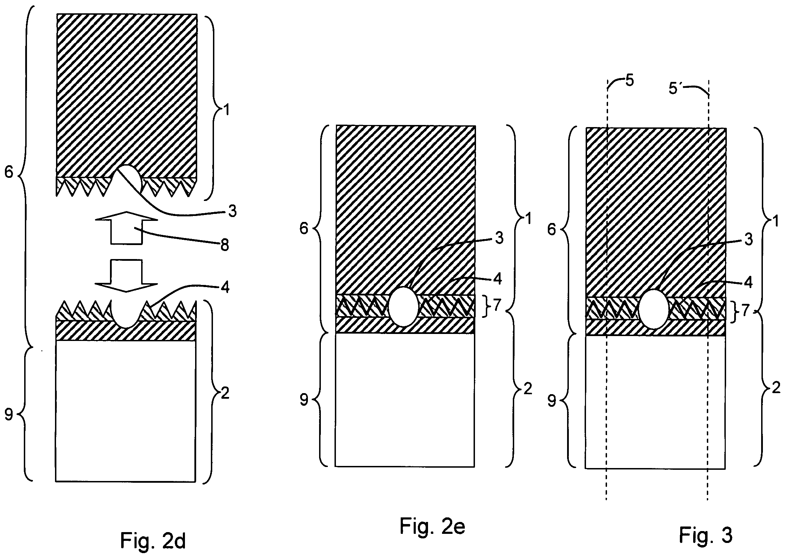

Das dargestellte Verfahren sieht dabei vor, dass ein metallisches Bauteil mit einer Öffnung 3 und/oder einem Hohlraum (nicht dargestellt) versehen ist, wobei dieses Bauteil durch ein selektives Lasersinter- und/oder Laserschmelzverfahren schichtweise durch ein ein- oder mehrkomponentiges metallisches Pulver an den entsprechenden Querschnittsbereichen von Laserstrahlung aufgeschmolzen wird. Das Bauteil wird nach dem Aufbau durch einen Lasersinter- und/oder ein Laserschmelzvorgang einem Bruchtrennprozess unterzogen (vgl. Fig. 2b und 2c), dabei wird das Bauteil entlang einer Bruchlinie 4 in mindestens zwei Bruchteile 1, 2 gebrochen. Gemäß Figur 2e werden die Bruchteile 1, 2 an Ihren Bruchstellen, und damit an Ihrer Bruchlinie 4 zur Bildung des Bauteils wieder miteinander verbunden bzw. zusammengesetzt. Die Bruchlinie 4 verläuft zumindest Bereichsweise derart, dass Sie die wenigstens eine Öffnung 3 und/oder den wenigstens einen Hohlraum berührt und/oder durchsetzt. Das Verbinden kann gemäß Figur 2e durch Stoffschluss erreicht werden, z. B. durch Kleben. Gemäß Figur 3 kann zusätzlich oder anstelle einer Klebeverbindung die Verbindung der beiden Bruchteile 1, 2 wie durch die gestrichelten Linien 5, 5' angedeutet durch eine Formschlussverbindung wie z. B. eine Schraub- oder Nietverbindung erfolgen.

Das Bauteil weist einen ersten Bauteilbereich 6 auf, der aus einem Lasersinter- und/oder Laserschmelzprozess generativ aufgebaut wurde, wobei während des Lasersinter- und/oder Laserschmelzvorgangs die Laserintensität bzw. der Eintrag pro Flächeneinheit in das Pulvermaterial ausgehend von dem Laserstrahl geändert wird. Zusätzlich oder alternativ kann die Änderung auch umfassen, dass innerhalb einer Pulverschicht der Laserstrahl nach dem ersten Aufschmelzen des Pulvers an wenigstens einem bereits verfestigten Schichtbereich, das Pulver nochmals aufgeschmolzen und/oder erwärmt und/oder abgetragen wird. Durch die Änderung des Energieeintrags pro Fläche des Lasers entsteht eine Zone 7, 7' innerhalb des ersten, generativ aufgebauten Bauteilbereichs 6, die eine gegenüber benachbarten Zonen andere Bauteileigenschaft, insbesondere andere Sprödigkeit aufweist.

Vorzugsweise ist die Zone 7, 7' im Bereich der Bruchlinie 4 angeordnet. Beispielsweise zeichnet sich die Zone 7 durch eine höhere Sprödigkeit gegenüber angrenzender Zonen aus und bildet damit während der Bruchtrennung den Bereich an dem die Bruchlinie 4 sich bildet. In der Zeichnungsfigur 2d ist der aufgebrochene Zwischenzustand der Bruchteile 1 und 2 dargestellt, wobei die Pfeile 8 eine Einwirkung auf die offene Bruchlinie 4 und/oder die aufgebrochene Öffnung 3 bzw. den aufgebrochenen Hohlraum darstellen. Damit wird ermöglicht, dass nach dem Bruchtrennen und vor dem miteinander Verbinden der Bruchteile 1,2 wenigstens eine Öffnung 3 und/oder ein Hohlraum und/oder die Bruchlinie 4 zumindest bereichsweise einer thermischen und/oder mechanischen Nachbehandlung unterzogen wird, zumindest bereichsweise mit einer Beschichtung versehen wird und/oder ein Körper ein oder angesetzt wird. Beispielsweise kann durch entsprechende Wärmebehandlung der Grad der Sprödigkeit in der Zone 7 bzw. an der Bruchlinie 4 und/oder der Öffnung 3 wieder herabgesetzt werden. So kann zum Beispiel eine klebende/haftwirkende und/oder versiegelnde Beschichtung ein Herauslösen einzelner kleinerer Bruchteile aus der Bruchlinie 4 verhindern.

In den dargestellten Ausführungsformen besteht das Bauteil aus wenigstens zwei Bauteilbereichen 6, 9 wobei der Bauteilbereich 9 aus einem konventionellen Herstellungsverfahren, insbesondere aus einem Gussverfahren und/oder einem spanabhebenden Verfahren hergestellt wird und ein zweiter Bauteilbereich 6 aus einem selektiven Lasersinter- und/oder Laserschmelzverfahren hergestellt wird. Dabei sind der erste und der zweite Bauteilbereich 6, 9 miteinander verbunden. Vorzugsweise wird der zweite Bauteilbereich 6 direkt auf den ersten Bauteilbereich 9 durch das selektive Lasersinter- und/oder Laserschmelzverfahren aufgebaut. Alternativ können die beiden Bauteilbereiche 6, 9 auch durch Kleben, Auftragsschweißen oder ähnliche Verfahren miteinander verbunden werden. Alternativ oder zusätzlich können auch formschlüssige und/oder lösbare Verbindungen zur Anbindung des ersten und zweiten Bauteilbereichs 6, 9 angewandt werden.

Zusätzlich zu der oben beschriebenen Zone 7 die, wenn Sie spröde ausgebildet ist, als benachbarte Zone eine gezielte Beeinflussung der Bruchlinie 4 erlaubt, kann dieser Bereich (Zone 7) ferner eine geometrisch ausgebildete Sollbruchstelle 10 aufweisen. Eine derartige Sollbruchstelle 10 kann beispielsweise dadurch generiert werden, dass dort das Pulvermaterial unvollständig oder nicht über die gesamte Fläche aufgeschmolzen und
verfestigt wird. Wiederum alternativ oder zusätzlich dazu kann nach dem Lasersinter- und/oder Laserschmelzverfahren das Bauteil durch oberflächliche Einwirkung eines Lasers und/oder eines spanabhebenden Werkzeugs einen Materialabtrag und/oder eine Materialschwächung erfahren, die im oberflächlichen Bereich 11 der Bruchlinie 4 liegt. Insbesondere kann die- ser Materialabtrag und/oder diese Materialschwächung durch in den Laser der Lasersinter- und/oder Laserschmelzvorrichtung ausgeführt werden.

Neben dem Verfahren richtet sich der Erfindungsgegenstand auch auf das Bauteil an sich, dessen Öffnung 3 beispielsweise als Lagebereich zu direkten oder indirekten Lagerung eines drehbar gelagerten Mittels (nicht dargestellt) ausgebildet sein kann. Das Bauteil kann ein Motoranbauteil, insbesondere ein Pleuel, ein Zylinderkopf, ein Kurbelwellengehäuse und/oder ein nicht Motorteil wie beispielsweise ein Dentalteil und/oder ein Kunststoffspritzgussformwerkzeug und/oder ein Bestandteile der vorgenannten Teile sein.

In Zeichnungsfigur 8 ist die Öffnung 3 derart ausgebildet, dass sich diese sowohl im Bereich des ersten, generativ hergestellten Bauteilbereichs 6 als auch in den Bereich des zweiten, konventionell gefertigten Bauteilbereichs 9 erstreckt. Damit kann das Bauteil auch trotz einer größeren oder länglichen Öffnung 3 mit dem Hybridbauprinzip derart ausgelegt werden, dass das Volumen und/oder die Dimensionierung des generativen Bauteilbereichs 6 relativ gering gehalten werden kann.

Auch ist in Zeichnungsfigur 8 ersichtlich, dass die Zone 7 sowohl an ihren Rändern nahe dem oberflächlichen Bereich 11, als auch an den Bereichen 12 die sich in der Nähe der Öffnung 3 befinden mit einem reduzierter Querschnitt der Zone 7 versehen wurde, vgl. Reduktionsbereiche 13, 13'. Dies trägt dem Umstand Rechnung, dass sich im Falle eines Bruchs die Bruchlinie 4 innerhalb der Zone 7 ausbildet und dass der Start und Endpunkt der Bruchlinie 4 "noch definierter" auslegbar ist, da sich die Bruchlinie 4 vorzugsweise innerhalb der Zone 7 ausbildet.

In Zeichnungsfigur 4 ist der generativ aufgebaute Bauteilbereich 6 wiederum auf die Bruchstelle minimiert, da dieses Bauteil 3 Bauteilbereiche umfasst, wobei der mittlere Bauteilbereich 6 generativ gefertigt wurde und der obere und untere Bauteilbereich 9, 9' konventionell gefertigt wurde. Dabei kann beispielsweise auf dem Bauteilbereich 9 generativ der Bauteilbereich 6 aufgebaut werden und anschließend auf die zweite Fläche des Bauteilbereichs 6 der Bauteilbereich 9 stoff- und/oder formschlüssig angebunden werden.

Gemäß Zeichnungsfigur 5 wird die "Sandwichbauweise" umgekehrt, sodass ein Mittelbereich 9 aus einem konventionellen Fertigungsverfahren und zwei Bauteilbereiche 6, 6' jeweils aus einem generativen Herstellverfahren aufgebaut werden, wobei die Bruchlinien 4, 4' jeweils in den generativen Bauteilbereichen 6, 6' angeordnet sind und sich dort vorzugsweise in den spröden Zonen 7, 7' befinden.

In Zeichnungsfigur 6 ist schematisch dargestellt, dass der Verlauf der Bruchlinie 4 nicht zwangsläufig in einer Ebene verlaufen muss, sondern auch Knickbereiche 12 umfassen kann. Der Knickbereich 12 muss nicht zwangsläufig mit einer Öffnung 3 versehen sein.

Gemäß den nicht erfindungsgemäßen Zeichnungsfiguren 9 bis 11 muss das erfindungsgemäße Bauteil nicht mit einer Öffnung 3 versehen sein. In bestimmten Fällen ist es ausreichend, wenn die Einflussnahme auf die Bruchlinie 4 ausschließlich über die Veränderung der Intensität des Laserstrahls zur Bildung einer spröden Zone 7 erfolgt.

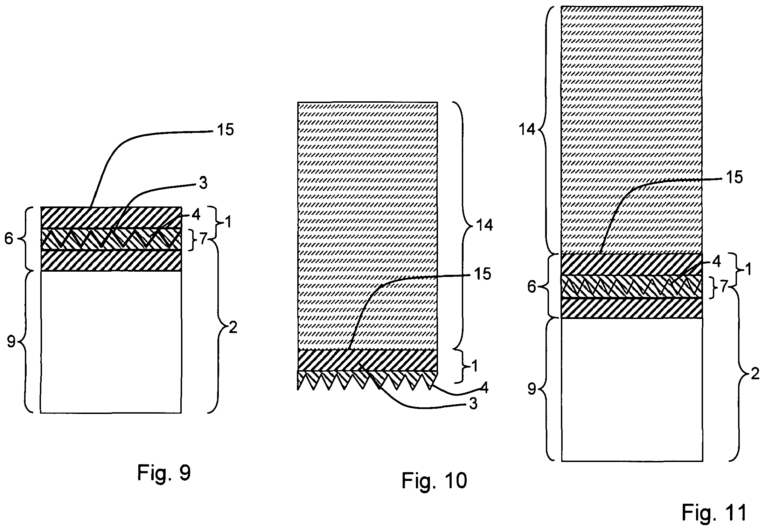

Ferner geht aus den Figuren 9 bis 11 ein Bauteil hervor das durch generativen Aufbau eines ersten generativen Bauteilbereichs 6 auf einen zweiten konventionell gefertigten Bauteilbereich 9 vorsieht. Innerhalb des ersten Bauteilbereichs 6 wird eine Zone 7 durch Veränderungen des Energieeintrags pro Fläche des Lasers gebildet. Innerhalb dieser Zone 7 bildet sich im Bruchprozess die Bruchlinie 4 und es entstehen die Bruchteile 1 und 2. Auf die Oberfläche 15 des ersten Bruchteils 1 wird nach dem Bruchtrennen ein dritter, generativ gefertigter Bauteilbereich 14 (z.B. durch SLM) aufgebaut, vgl. Figur 10. Abschließend werden das erste und das zweite Bauteil 1, 2 zusammengesetzt bzw. verbunden so dass ein insgesamt größeres Bauteil bestehend aus den Bauteilbereichen 6, 9 und 14 gebildet wird, vgl. Figur 11. Die generativ gefertigten Bauteilbereiche 9 und 14 können aus gleichen oder unterschiedlichen SLM-Verfahren gebildet sein und/oder aus gleichen oder unterschiedlichen Baumaterialzusammensetzungen bestehen.

### BEZUGSZEICHENLISTE

- 1: Bruchteil
- 2: Bruchteil
- 3,3': Öffnung
- 4,4': Bruchlinie
- 5,5': Linie
- 6,6': Bauteilbereich erster, generativ
- 7,7': Zone
- 8: Pfeil
- 9, 9': Bauteilbereich zweiter, konventionell
- 10: Sollbruchstelle
- 11: oberflächlicher Bereich
- 12, 12': Knickbereiche
- 13, 13': Reduktionsbereich
- 14: Bauteil dritter, generativ
- 15: Oberfläche v. 6

## Patentansprüche

1. Verfahren zur Herstellung metallischer Bauteile, die eine Öffnung (3) und/oder einen Hohlraum umfassen, wobei das Bauteil zumindest einen generativ aufgebauten Bauteilbereich (6) umfasst, der durch selektives Lasersinter- und/oder Laserschmelzen hergestellt wird, wobei schichtweise ein- oder mehrkomponentiges metallisches Pulver an entsprechenden Querschnittsbereichen durch Einsatz von Laserstrahlung aufgeschmolzen wird,
**dadurch gekennzeichnet, dass**
das Bauteil nach dem Lasersinter- und/oder Laserschmelzvorgang einem Bruchtrennprozess unterzogen wird, bei dem das Bauteil entlang einer nur durch den generativ aufgebauten Bauteilbereich (6) verlaufenden Bruchlinie (4) in mindestens zwei Bruchteile (1, 2) gebrochen wird und danach die wenigstens zwei Bruchteile (1, 2) an ihren Bruchstellen zur Bildung des Bauteils miteinander verbunden werden, wobei die Bruchlinie (4) zumindest bereichsweise die wenigstens eine Öffnung (3) und/oder den wenigstens einen Hohlraum berührt und/oder durchsetzt.

2. Verfahren nach Anspruch 1,
**dadurch gekennzeichnet, dass**
innerhalb einer Pulverschicht und/oder in unterschiedlichen Pulverschichten der Energieeintrag pro Flächeneinheit in das Pulvermaterial ausgehend von dem Laserstrahl geändert wird und/oder innerhalb einer Pulverschicht der Laserstrahl nach dem ersten Aufschmelzen des Pulvers an wenigstens einem bereits verfestigten Schichtbereich das Pulver nochmals aufschmelzt und/oder nochmals erwärmt und/oder abträgt.

3. Verfahren nach Anspruch 2,
**dadurch gekennzeichnet, dass**
im Bereich der Bruchlinie (4) die Änderung des Energieeintrags pro Flächeneinheit und/oder das nochmalige Aufschmelzen und/oder das Erwärmen und/oder das Abtragen durch den Laserstrahl ausgeführt wird.

4. Verfahren nach einem der Ansprüche 1 bis 3,
**dadurch gekennzeichnet, dass**
nach dem Bruchtrennen und vor dem miteinander Verbinden der Bruchteile (1, 2) wenigstens eine Öffnung (3) und/oder ein Hohlraum zumindest bereichsweise eine thermische und/oder mechanische Nachbehandlung erfährt, zumindest bereichsweise mit einer Beschichtung versehen wird und/oder ein Körper ein- oder angesetzt wird.

5. Verfahren nach einem der vorhergehenden Ansprüche,
**dadurch gekennzeichnet, dass**
das Bauteil aus wenigstens zwei Bauteilbereichen (6, 9) besteht, wobei ein zweiter Bauteilbereich (9) aus einem Gussverfahren oder einem spanabhebenden Verfahren hergestellt wird und ein erster Bauteilbereich (6) aus einem selektiven Lasersinter- und/oder Laserschmelzverfahren hergestellt wird, wobei der erste und der zweite Bauteilbereich (6, 9) miteinander verbunden sind.

6. Verfahren nach Anspruch 5,
**dadurch gekennzeichnet, dass**
der erste Bauteilbereich (6) direkt auf den zweiten Bauteilbereich (9) durch ein selektives Lasersinter- und/oder Laserschmelzverfahren aufgebaut wird.

7. Verfahren nach einem der vorhergehenden Ansprüche,
**dadurch gekennzeichnet, dass**
im Bereich der Bruchlinie (4) zumindest bereichsweise das Bauteil geometrisch ausgebildete Sollbruchstellen (10) aufweist, insbesondere Bereiche in denen keine vollständige und/oder vollflächige Aufschmelzung des Pulvers erfolgt.

8. Verfahren nach einem der vorhergehenden Ansprüche,
**dadurch gekennzeichnet, dass**
nach dem Lasersinter- und/oder Laserschmelzverfahren das Bauteil durch oberflächliche Einwirkung eines Lasers und/oder eines spanabhebenden Werkzeugs einen Materialabtrag und/oder eine Materialschwächung erfährt, die im oberflächlichen Bereich (11) der Bruchlinie (4) liegt, insbesondere wird zum Materialabtrag und/oder zur Materialschwächung der Laser des Lasersinter- und/oder Laserschmelzverfahrens verwendet.

9. Bauteil, erhältlich durch ein Verfahren nach einem der vorhergehenden Ansprüche, mit einer Öffnung (3) und/oder einem Hohlraum, das zumindest einen generativ aufgebauten Bauteilbereich (6) umfasst, der aus einem selektiven Lasersinter- und/oder Laserschmelzverfahren hergestellt wird, wobei schichtweise aufgebrachtes Metallpulver durch Einwirkung eines Laserstrahls an entsprechenden Stellen des Bauteils aufgeschmolzen wird,
**dadurch gekennzeichnet, dass**
das Bauteil aus wenigstens zwei miteinander verbundenen Bruchteilen (1, 2) besteht, die durch Bruchtrennung des nach dem Lasersinter- und/oder Laserschmelzverfahren hergestellten Bauteils entlang einer nur durch den generativ aufgebauten Bauteilbereich (6) verlaufenden Bruchlinie (4) gebildet wurden, wobei die Bruchlinie (4) zumindest bereichsweise die Öffnung (3) und/oder den Hohlraum berührt und/oder durchsetzt.

10. Bauteil nach Anspruch 9,
**dadurch gekennzeichnet, dass**
das Bauteil aus wenigstens zwei miteinander verbundenen Bauteilbereichen (6, 9) besteht wobei ein erster Bauteilbereich (6) durch das selektive Lasersinter- und/oder Laserschmelzverfahren und ein zweiter Bauteilbereich (9) durch ein Gussverfahren und/oder ein spanabhebendes Verfahren hergestellt ist.

11. Bauteil nach Ansprüche 9 oder 10,
**dadurch gekennzeichnet, dass**
der erste und der zweite Bruchteil (6, 9) lösbar miteinander verbunden ist, insbesondere formschlüssig, und/oder der erste und der zweite Bauteilbereich (6, 9) unlösbar miteinander verbunden ist, insbesondere stoffschlüssig.

12. Bauteil nach einem der Ansprüche 9 bis 11,
**dadurch gekennzeichnet, dass**
die Öffnung (3) des Bauteils als Lagerbereich zur direkten oder indirekten Lagerung eines drehbar gelagerten Mittels ausgebildet ist.

13. Bauteil nach einem der Ansprüche 9 bis 12,
**dadurch gekennzeichnet, dass**
das Bauteil ein Motorteil, ein Motoranbauteil, ein Zylinderkopf, ein Kurbelwellengehäuse, ein Auspuffsystem, ein Ölmodul, ein Nockenwellenlager, ein Fahrwerksteil, ein Kurbelwellenlager, ein Gehäuseteil, ein Deckelelement, ein Lagerelement, ein Verbindungs- oder Schnittstellenelement von metallischen und/oder Kunststoffteilen, ein Dentalteil und/oder ein Bestandteil der vorgenannten Teile ist.

14. Bauteil nach einem der Ansprüche 9 bis 13,
**dadurch gekennzeichnet, dass**
zumindest der durch ein selektives Lasersinter- und/oder Laserschmelzverfahren aufgebaute Bauteilbereich aus Aluminium, Edelstahl, Warmarbeitsstahl, Titan und/oder einer Nickel-Basislegierung gebildet ist.

15. Bauteil nach einem der Ansprüche 9 bis 14,
**dadurch gekennzeichnet, dass**
zumindest eine die Bruchlinie (4) kontaktierende Öffnung (3) und/oder Hohlraum sich sowohl in den durch ein selektives Lasersinter- und/oder Laserschmelzverfahren aufgebauten Bauteilbereich als auch in den durch ein andersartiges Herstellverfahren aufgebauten Bauteilbereich erstreckt.

## Claims

1. Process for producing metallic components which comprise an opening (3) and/or a hollow space, wherein the component comprises at least one generatively constructed component region (6) which is produced by selective laser sintering and/or laser melting, wherein single-component or multicomponent metallic powder is melted in layers at appropriate cross-sectional regions by using laser radiation,
**characterized in that**
after the laser sintering and/or laser melting process, the component is subjected to a fracture splitting process, in which the component is fractured into at least two fractional parts (1, 2) along a fracture line (4) which only extends through the generatively constructed component region (6) and then the at least two fractional parts (1, 2) are connected to one another at the sites of fracture thereof to form the component, wherein the fracture line (4) comes into contact with and/or passes through the at least one opening (3) and/or the at least one hollow space at least in certain regions.

2. Process according to Claim 1,
**characterized in that**
the energy input per unit area into the powder material proceeding from the laser beam is varied within a powder layer and/or in different powder layers and/or, after the powder has been melted for the first time, the laser beam again melts and/or again heats and/or removes the powder within a powder layer at at least one, already solidified layer region.

3. Process according to Claim 2,
**characterized in that**
the variation in the energy input per unit area and/or the further melting and/or the heating and/or the removal by the laser beam is performed in the region of the fracture line (4).

4. Process according to one of Claims 1 to 3,
**characterized in that**
after the fracture splitting and before the fractional parts (1, 2) are connected to one another, at least one opening (3) and/or a hollow space undergoes thermal and/or mechanical aftertreatment at least in certain regions, is provided with a coating at least in certain regions and/or a body is inserted or attached.

5. Process according to one of the preceding claims,
**characterized in that**
the component consists of at least two component regions (6, 9), wherein a second component region (9) is produced by a casting process or a chip-forming process and a first component region (6) is produced by a selective laser sintering and/or laser melting process, with the first and the second component regions (6, 9) being connected to one another.

6. Process according to Claim 5,
**characterized in that**
the first component region (6) is constructed directly on the second component region (9) by a selective laser sintering and/or laser melting process.

7. Process according to one of the preceding claims,
**characterized in that**
in the region of the fracture line (4), the component has at least in certain regions geometrically formed predetermined breaking points (10), in particular regions in which complete and/or all-over melting of the powder is not effected.

8. Process according to one of the preceding claims,
**characterized in that**
after the laser sintering and/or laser melting process, the component undergoes material removal and/or material weakening, which lies in the superficial region (11) of the fracture line (4), by the superficial action of a laser and/or a chip-forming tool, use being made in particular of the laser from the laser sintering and/or laser melting process for material removal and/or for material weakening.

9. Component which can be obtained by a process according to one of the preceding claims, with an opening (3) and/or a hollow space, which comprises at least one generatively constructed component region (6) which is produced by a selective laser sintering and/or laser melting process, wherein metal powder which has been applied is melted in layers by the action of a laser beam at appropriate sites of the component,
**characterized in that**
the component consists of at least two interconnected fractional parts (1, 2), which were formed by subjecting the component produced by the laser sintering and/or laser melting process to fracture splitting along a fracture line (4) which only extends through the generatively constructed component region (6), wherein the fracture line (4) comes into contact with and/or passes through the opening (3) and/or the hollow space at least in certain regions.

10. Component according to Claim 9,
**characterized in that**
the component consists of at least two interconnected component regions (6, 9), wherein a first component region (6) is produced by the selective laser sintering and/or laser melting process and a second component region (9) is produced by a casting process and/or a chip-forming process.

11. Component according to Claim 9 or 10,
**characterized in that**
the first and the second fractional parts (6, 9) are detachably connected to one another, in particular in a positively locking manner, and/or the first and the second component regions (6, 9) are nondetachably connected to one another, in particular with an integral bond.

12. Component according to one of Claims 9 to 11,
**characterized in that**
the opening (3) in the component is in the form of a bearing region for directly or indirectly mounting a rotatably mounted means.

13. Component according to one of Claims 9 to 12,
**characterized in that**
the component is an engine part, an engine attachment part, a cylinder head, a crankcase, an exhaust system, an oil module, a camshaft bearing, a chassis part, a crankshaft bearing, a casing part, a cover element, a bearing element, a connection or interface element of metallic and/or plastics parts, a dental part and/or a component part of the aforementioned parts.

14. Component according to one of Claims 9 to 13,
**characterized in that**
at least that component region which is constructed by a selective laser sintering and/or laser melting process is formed from aluminium, high-grade steel, hot-work steel, titanium and/or a nickel-based alloy.

15. Component according to one of Claims 9 to 14,
**characterized in that**
at least one opening (3) and/or hollow space which makes contact with the fracture line (4) extends both into the component region which is constructed by a selective laser sintering and/or laser melting process and into the component region which is constructed by a different type of production process.

## Revendications

1. Procédé de fabrication de composants métalliques qui comportent une ouverture (3) et/ou une cavité, le composant comportant au moins une partie (6) de structure formée par apport de matière réalisé par frittage sélectif au laser et/ou fusion sélective au laser, dans lequel une poudre métallique à un ou plusieurs composants est fondue couche par couche en des parties appropriées de la section transversale par recours à un rayonnement laser,
**caractérisé en ce que**
après l'opération de frittage et/ou de fusion au laser, le composant subit une opération de séparation par rupture dans laquelle le composant est rompu en au moins deux fragments (1, 2) le long d'une ligne de rupture (4) qui s'étend uniquement dans la partie (6) du composant formée par apport de matière, les deux ou plusieurs fragments (1, 2) étant ensuite reliés l'un à l'autre en leurs emplacements de rupture pour former le composant, la ligne de rupture (4) touchant et/ou traversant au moins certaines parties de la ou des ouvertures (3) et/ou de la ou des cavités.

2. Procédé selon la revendication 1, **caractérisé en ce que** l'apport d'énergie par unité de surface par le faisceau laser dans le matériau pulvérulent à l'intérieur d'une couche ou de différentes couches de poudre est modifié et/ou **en ce qu'**après la première fusion de la poudre, le faisceau laser fond, chauffe et/ou enlève encore une fois la poudre en au moins une partie déjà solidifiée d'une couche de poudre.

3. Procédé selon la revendication 2, **caractérisé en ce que** la modification de l'apport d'énergie par unité de surface et/ou la reprise de la fusion, du chauffage et/ou de l'enlèvement par le faisceau laser sont réalisées au niveau de la ligne de rupture (4).

4. Procédé selon l'une des revendications 1 à 3, **caractérisé en ce qu'**après la séparation par rupture et avant la liaison l'un à l'autre des fragments (1, 2), au moins certaines parties d'une ouverture (3) et/ou d'une cavité subissent un traitement thermique et/ou un traitement mécanique, sont au moins en partie dotées d'un revêtement et/ou un corps y est inséré ou placé.

5. Procédé selon l'une des revendications précédentes, **caractérisé en ce que** le composant est constitué d'au moins deux parties (6, 9) de composant, une deuxième partie (9) du composant étant réalisée par une opération de moulage ou une opération d'enlèvement de matière, une première partie (6) du composant étant réalisée par une opération de frittage sélectif et/ou de fusion sélective par laser, la première et la deuxième partie (6, 9) du composant étant reliées l'une à l'autre.

6. Procédé selon la revendication 5, **caractérisé en ce que** la première partie (6) du composant est formée directement sur la deuxième partie (9) du composant par une opération de frittage sélectif et/ou de fusion sélective au laser.

7. Procédé selon l'une des revendications précédentes, **caractérisé en ce qu'**au niveau de la ligne de rupture (4), au moins certaines parties du composant présentent des emplacements (10) de rupture préférentielle présentant une forme géométrique, et en particulier des parties dans lesquelles il n'y a pas de fusion complète de la poudre ou de fusion de la poudre sur toute la surface.

8. Procédé selon l'une des revendications précédentes, **caractérisé en ce qu'**après l'opération de frittage et/ou de fusion au laser, le composant subit un enlèvement de matière et/ou un affaiblissement de matière par action d'un laser et/ou d'un outil d'enlèvement de matière dans la partie superficielle (11) de la ligne de rupture (4), et **en ce qu'**en particulier pour l'enlèvement de matière et/ou l'affaiblissement de matière, on recourt au laser de l'opération de frittage et/ou de fusion au laser.

9. Composant obtenu en recourant à un procédé selon l'une des revendications précédentes, qui présente une ouverture (3) et/ou une cavité, le composant comportant au moins une partie (6) de structure formée par apport de matière réalisé par frittage sélectif au laser et/ou fusion sélective au laser, dans lequel une poudre métallique à un ou plusieurs composants est fondue couche par couche en des parties appropriées de la section transversale par recours à un rayonnement laser, **caractérisé en ce que**
le composant est constitué d'au moins deux fragments (1, 2) reliés l'un à l'autre qui ont été formés en séparant le composant par rupture après l'opération de frittage sélectif et/ou de fusion sélective au laser, le long d'une ligne de rupture (4) qui s'étend uniquement dans la partie (6) du composant formée par apport de matière, la ligne de rupture (4) touchant et/ou traversant au moins certaines parties de l'ouverture (3) et/ou de la cavité.

10. Composant selon la revendication 9, **caractérisé en ce que** le composant est constitué d'au moins deux parties (6, 9) de composant reliées l'une à l'autre, une première partie (6) du composant étant réalisée par une opération de frittage sélectif et/ou de fusion sélective par laser et une deuxième partie (9) du composant étant réalisée par une opération de moulage ou une opération d'enlèvement de matière.

11. Composant selon les revendications 9 ou 10, **caractérisé en ce que** les premiers et les deuxièmes fragments (6, 9) sont reliés l'un à l'autre de manière libérable, en particulier en correspondance géométrique, et/ou **en ce que** la première et la deuxième partie (6, 9) du composant sont reliées l'une à l'autre de manière non libérable, en particulier en correspondance de matière.

12. Composant selon l'une des revendications 9 à 11, **caractérisé en ce que** l'ouverture (3) du composant est configurée comme partie de palier destinée à monter directement ou indirectement un moyen monté à rotation.

13. Composant selon l'une des revendications 9 à 12, **caractérisé en ce que** le composant est une pièce de moteur, un composant de moteur, une tête de cylindre, un carter de vilebrequin, un système d'échappement, un module de lubrification, un palier d'arbre à cames, une pièce de train de roulement, un palier d'arbre de vilebrequin, une pièce de boîtier, un élément de couvercle, un élément de palier, un élément de liaison et d'interfaçage de pièces métalliques et/ou de pièces en matière synthétique, une pièce de moteur et/ou une partie desdites pièces.

14. Composant selon l'une des revendications 9 à 13, **caractérisé en ce que** la partie du composant réalisée par frittage sélectif et/ou fusion sélective au laser est formée d'aluminium, d'acier allié, d'acier traité à chaud, de titane et/ou d'un alliage à base de nickel.

15. Composant selon l'une des revendications 9 à 14, **caractérisé en ce qu'**au moins une ouverture (3) en contact avec la ligne de rupture (4) et/ou une cavité s'étend à la fois dans la partie du composant réalisée par frittage sélectif et/ou fusion sélective au laser et dans la partie du composant réalisée en recourant à un autre procédé de fabrication.
